# FASCICULE DE BREVET EUROPEEN

(11) **EP 1 013 149 B1**
(45) Date de publication et mention de la délivrance du brevet: **19.09.2001**
(21) Numéro de dépôt: 98941484.2
(22) Date de dépôt: 29.07.1998
(51) Int. Cl.: H05B 6/64

(54) **PLAT DE CUISSON POUR FOUR A MICRO-ONDES**
KOCHSCHALE FÜR MIKROWELLENOFEN
BAKING DISH FOR MICROWAVE OVEN

(30) Priorité: 11.08.1997 FR 9710452
(43) Date de publication de la demande: 28.06.2000
(73) Titulaire: Saint-Gobain Performance Plastics Gessil, 38290 La Verpillère (FR)
(72) Inventeur: ARIENTE, Marc, F-38300 Bourgoin-Jallieu (FR); VELARD, Philippe, F-01150 Lagnieu (FR)
(74) Mandataire: Guerre, Dominique
(86) Numéro de dépôt international: FR9801683
(87) Numéro de publication internationale: WO9908486

(56) Documents cités:
- EP-A- 0 240 235
- EP-A- 0 417 316
- GB-A- 2 186 478
- US-A- 5 310 980
- US-A- 5 519 196
- PATENT ABSTRACTS OF JAPAN vol. 015, no. 160 (M-1105), 22 avril 1991 & JP 03 029780 A (SHOWA DENKO KK), 7 février 1991

## Description

La présente invention concerne un plat de cuisson pour four à micro-ondes, et plus particulièrement un plat générant de la chaleur par absorption d'un rayonnement micro-ondes, et ceci à différentes fins, notamment pour brunir un aliment pendant sa cuisson à coeur, toujours sous l'effet du rayonnement micro-ondes.

Le document EP-A-0 417 316 décrit un plat de cuisson pour un four à micro-ondes selon le préambule de la revendication 1.

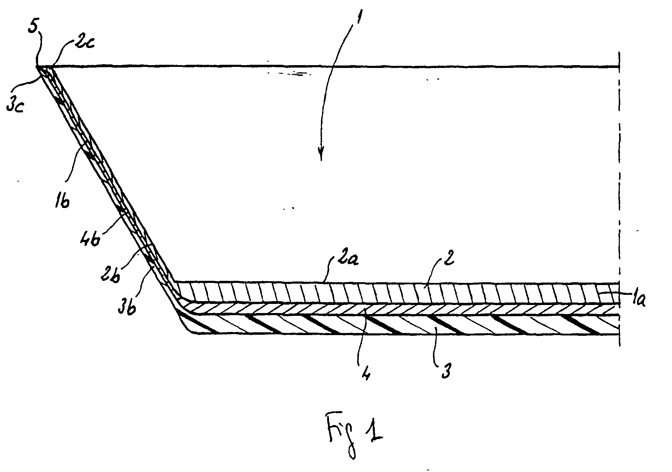

Conformément au document US-A 5 523 549, et plus précisément par référence au mode d'exécution décrit en se référant à la figure 2, on connaît déjà un plat de cuisson comprenant dans sa partie plane au moins deux épaisseurs, à savoir :
- une épaisseur ou plaque rigide d'un matériau métallique, donc conducteur de la chaleur, dont la surface extérieure est destinée à être en contact avec un aliment à cuire,
- et une couche ou épaisseur d'un matériau élastomère souple, substantiellement non conducteur de la chaleur, formant un bord périphérique, lequel enserre la plaque métallique.

S'agissant de la cuisson d'aliments préparés du type tarte ou pizza, un plat de cuisson tel que précédemment défini ne se prête pas à un démoulage facile, une fois la cuisson terminée, en particulier pour séparer l'aliment préparé du plat.

Tel est est le problème que se propose de résoudre la présente invention, à savoir obtenir un plateau thermogène facilitant la séparation de l'aliment cuit par rapport à la surface intérieure dudit plat, et ce sans recourir à des matériaux anti-adhésifs rapportés sur une surface métallique.

Conformément à l'invention, le plat a au moins dans sa partie plane une structure composite monolithe et souple, comprenant :
- une couche externe d'un matériau élastomère substantiellement non conducteur de la chaleur, et donc relativement isolant thermiquement,
- une couche interne d'un matériau élastomère substantiellement conducteur de la chaleur,
- et un matériau thermogène disposé et distribué à plat dans ladite structure composite monolithe, les couches interne et externe étant directement ou indirectement liées l'une à l'autre, notamment par leur bordures périphériques respectives.

Préférentiellement, une couche intercalaire thermogène, elle aussi en matériau élastomère, dans laquelle est distribué le matériau thermogène, est disposée entre les deux couches, interne et externe. Pour obtenir la structure monolithe et souple, les trois couches, interne, intercalaire et externe sont liées les unes aux autres.

Par ailleurs, un plat de cuisson selon la présente invention apporte en outre les avantages suivants : sa structure relativement souple permet de le nettoyer facilement ; grâce à l'isolation apportée par la couche externe, l'utilisateur ne risque aucune brûlure ou échauffement en manipulant le plat selon l'invention. Et la couche extérieure peut être teintée pour distinguer l'extérieur de l'intérieur du plat de cuisson.

La présente invention est maintenant décrite par référence au dessin annexé ou figure unique, représentant une vue en coupe transversale d'un plat de cuisson selon l'invention.

Conformément à l'invention, un plat de cuisson 1 pour four à micro-ondes comprend dans sa partie plane la, au moins :
- une couche externe 3 d'un matériau élastomère, par exemple silicone, substantiellement non conducteur de la chaleur, ou relativement isolant thermiquement,
- une couche interne 2 d'un matériau élastomère substantiellement conducteur de la chaleur, par exemple un silicone chargé avec un matériau conducteur de la chaleur, par exemple carbone,
- et une couche intercalaire thermogène dans laquelle est distribué un matériau thermogène, par exemple une ferrite ; cette couche intercalaire est disposée entre les deux couches, interne 2 et externe 3, et est liée de part et d'autre aux couches précitées 2 et 3 ; cette couche intercalaire est constituée également par un matériau élastomère, par exemple du silicone, dans lequel est distribuée et noyée la ferrite par exemple.

Comme on le sait, les ferrites sont des matériaux thermogènes, par absorption d'un rayonnement électromagnétique haute fréquence, et perte magnétique dans lesdits matériaux générant de la chaleur. Ces ferrites sont des oxydes métalliques mixtes, principalement de fer, mais aussi de manganèse ou zinc. A titre d'exemple, on utilise selon l'invention une ferrite de manganèse et zinc, sous forme de poudre, comprenant un oxyde de fer, zinc et manganèse. Ces ferrites peuvent être incorporées et distribuées dans tout matériau élastomère du type silicone, selon toute méthode appropriée connue de l'homme du métier, et ceci avant réticulation ou vulcanisation du silicone élastomère.

A titre de variante, le matériau thermogène, par exemple ferrite ou noir de carbone est disposé sous forme divisée, en étant distribué à plat entre les deux couches, interne et externe, du plat de cuisson.

Les couches interne 2, intercalaire 4, et externe 3 comportent respectivement des rebords interne 2b, intercalaire 4b, et externe 3b, adaptés l'un à l'autre pour former ensemble un bord monolithe et souple 1b, en continuité avec la partie plane 1a du plat 1.

Les rebords interne 2b et externe 3b sont par ailleurs adaptés l'un à l'autre pour être solidarisés par liaison 5 directe ou indirecte, par exemple soudure, selon leurs bordures supérieures respectives 2c et 3c. De cette manière, la couche intercalaire 4 est prise en sandwich entre les couches interne 2 et externe 3, et est limitée en extension périphérique par la liaison 5 entre les deux bordures 2c et 3c supérieures des couches interne 2 et externe 3 respectivement.

## Revendications

1. Plat de cuisson (1) pour four à micro-ondes, comprenant dans sa partie plane au moins deux épaisseurs (2,3), à savoir une épaisseur (2) d'un matériau non thermogène dont la surface extérieure (2a) est destinée à être au contact avec un aliment à cuire, et une couche ou épaisseur (3) formant un bord périphérique (3b), constituée par un matériau élastomère substantiellement non conducteur de la chaleur, **caractérisé en ce que** ledit plat (1) a au moins dans sa partie plane (1a) une structure composite monolithe et souple, comprenant une couche externe (3) du matériau élastomère substantiellement non conducteur de la chaleur, une couche interne (2) d'un matériau élastomère substantiellement conducteur de la chaleur, et un matériau (4) thermogène disposé et distribué à plat dans ladite structure composite monolithe, les couches interne et externe étant directement ou indirectement liées l'une à l'autre, notamment par leur bordures (3c, 2c) périphériques respectives.

2. Plat selon la revendication 1, **caractérisé en ce que** le matériau thermogène est sous forme divisée, et distribué à plat entre les deux couches, interne (2) et externe (3).

3. Plat selon la revendication 1, **caractérisé en ce qu'**une couche intercalaire (4) thermogène dans laquelle est distribué le matériau thermogène, est disposée entre les deux couches, interne (2) et externe (3).

4. Plat selon la revendication 3, **caractérisé en ce que** les couches externe (3), interne (2), et intercalaire (4) sont liées les unes aux autres.

5. Plat selon la revendication 1, **caractérisé en ce que** les couches interne (2) et externe (3) comportent respectivement des rebords interne (2b) et externe (3b), adaptés l'un à l'autre pour être solidarisés par liaison (5) directe ou indirecte selon leurs bordures supérieures respectives (2c, 3c).

6. Plat selon les revendications 1, 3 et 5, **caractérisé en ce que** la couche intercalaire (4) est prise en sandwich entre les couches interne (2) et externe (3), et est limitée en extension périphérique par la liaison (5) entre les deux bordures (2c, 3c) supérieures des couches interne (2) et externe (3) respectivement.

7. Plat selon la revendication 1, **caractérisé en ce que** le matériau thermogène est une ferrite.

## Claims

1. Roasting dish (1) for a microwave oven, comprising in its flat part at least two thicknesses (2, 3), that is a thickness (2) of a non-heat-generating material whose outer surface (2a) is designed to be in contact with food to be cooked, and a layer or thickness (3) forming a peripheral side (3b), consisting of an elastomer which is a poor heat conductor, **characterized in that** the said dish (1) has, at least in its flat part (1a), a monolithic and flexible composite structure, comprising an outer layer (3) of an elastomer which is a poor heat conductor, an inner layer (2) of an elastomer which is substantially heat conducting and a heat-generating material (4) placed and distributed flat in the said monolithic composite structure, the inner and outer layers being directly or indirectly bonded one to the other, especially by their respective peripheral edges (3c, 2c).

2. Dish according to Claim 1, **characterized in that** the heat-generating material is in divided form, and distributed flat between the two inner (2) and outer (3) layers.

3. Dish according to Claim 1, **characterized in that** a heat-generating interlayer (4), in which the heat-generating material is distributed, is placed between the inner (2) and outer (3) two layers.

4. Dish according to Claim 3, **characterized in that** the outer (3), inner (2) and inter- (4) layers are bonded one to the other.

5. Dish according to Claim 1, **characterized in that** the inner (2) and outer (3) layers comprise inner (2b) and outer (3b) rims respectively, matched one to the other in order to be secured by direct or indirect connection (5) along their respective upper edges (2c, 3c).

6. Dish according to Claims 1, 3 and 5, **characterized in that** the interlayer (4) is sandwiched between the inner (2) and outer (3) layers, and its peripheral extension is limited by the connection (5) between the two upper edges (2c, 3c) of the inner (2) and outer (3) layers respectively.

7. Dish according to Claim 1, **characterized in that** the heat-generating material is a ferrite.

## Patentansprüche

1. Garpfanne (1) für einen Mikrowellenofen, die in ihrem ebenen Teil zumindest zwei Dicken (2), (3) aufweist, nämlich eine Dicke (2) aus einem nicht wärmeerzeugenden Material, deren äußere Oberfläche (2a) dazu bestimmt ist, mit einem zu garenden Lebensmittel in Berührung zu stehen, und eine Lage oder Dicke (3), die einen umfänglichen Rand (3b) bildet, die durch ein im wesentlichen nicht wärmeleitendes elastomeres Material gebildet ist, **dadurch gekennzeichnet, daß** die Pfanne (1) zumindest in ihrem ebenen Teil (1a) eine monolithische und biegsame Verbundstruktur aufweist, die eine äußere Lage (3) aus im wesentlichen nicht wärmeleitenden Material, eine innere Lage (2) aus einem im wesentlichen wärmeleitenden elastomeren Material und ein flach in der monolithischen Verbundstruktur angeordnetes und verteiltes wärmeerzeugendes Material (4) aufweist, wobei die innere und äußere Lage direkt oder indirekt miteinander verbunden sind, vor allem durch ihre jeweilige umfängliche Kante (3c), (2c).

2. Pfanne nach Anspruch 1, **dadurch gekennzeichnet, daß** das wärmeerzeugende Material in fein verteilter Form flach zwischen der inneren Lage (2) und der äußeren Lage (3) verteilt ist.

3. Pfanne nach Anspruch 1, **dadurch gekennzeichnet, daß** eine wärmeerzeugende eingefügte Lage (4), in der das wärmeerzeugende Material verteilt ist, zwischen der inneren Lage (2) und äußeren Lage (3) angeordnet ist.

4. Pfanne nach Anspruch 3, **dadurch gekennzeichnet, daß** die äußere Lage (3), innere Lage (2) und eingefügte Lage (4) miteinander verbunden sind.

5. Pfanne nach Anspruch 1, **dadurch gekennzeichnet, daß** die innere Lage (2) und äußere Lage (3) einen inneren hochstehenden Rand (2b) bzw. äußeren hochstehenden Rand (3b) aufweisen, die aneinander angepaßt sind, um durch eine direkte oder indirekte Verbindung (5) an ihrer jeweiligen oberen Kante (2c), (3c) zusammengefügt zu sein.

6. Pfanne nach den Ansprüchen 1, 3 und 5, **dadurch gekennzeichnet, daß** die eingefügte Lage (4) in Sandwich-Anordnung zwischen die innere Lage (2) und äußere Lage (3) genommen und in umfänglicher Erstreckung durch die Verbindung (5) zwischen den oberen Kanten (2c), (3c) der inneren Lage (2) bzw. äußeren Lage (3) begrenzt ist.

7. Pfanne nach Anspruch 1, **dadurch gekennzeichnet, daß** das wärmeerzeugende Material ein Ferrit ist.
